(19) **Europäisches Patentamt European Patent Office Office européen des brevets**

(11) **EP 1 948 703 B1**

(12) **EUROPEAN PATENT SPECIFICATION**

(45) Date of publication and mention of the grant of the patent:
**29.04.2009 Bulletin 2009/18**

(51) Int Cl.:
**C08F 210/02** (2006.01)

(21) Application number: **06819401.8**

(22) Date of filing: **10.11.2006**

(86) International application number:
**PCT/EP2006/068354**

(87) International publication number:
**WO 2007/057361 (24.05.2007 Gazette 2007/21)**

(54) **PROPYLENE-ETHYLENE COPOLYMERS AND PROCESS FOR THEIR PREPARATION**

PROPYLEN-ETHYLEN-COPOLYMERE UND HERSTELLUNGSVERFAHREN DAFÜR

COPOLYMERES PROPYLENE-ETHYLENE ET LEUR PROCEDE DE PREPARATION

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.11.2005 EP 05110748**
**16.11.2005 US 737319 P**

(43) Date of publication of application:
**30.07.2008 Bulletin 2008/31**

(73) Proprietor: **Basell Poliolefine Italia S.r.l.**
**20124 Milano (IT)**

(72) Inventors:
• **BACCI, Dino**
**I-33170 Pordenone (IT)**
• **FAIT, Anna**
**I-44100 Ferrara (IT)**
• **MORINI, Giampiero**
**I-35100 Padova (IT)**
• **PELLEGATTI, Giampaolo**
**I-44030 Boara (FE) (IT)**
• **PIEMONTESI, Fabrizio**
**I-44030 Pontegradella (IT)**

(74) Representative: **Gaverini, Gaetano Luigi Attilio**
**Basell Poliolefine Italia S.r.l.**
**P.le G. Donegani 12**
**44100 Ferrara (IT)**

(56) References cited:
**EP-A- 0 374 695      EP-A1- 0 577 009**
**WO-A-93/19107      WO-A-20/04048424**
**US-A1- 2005 131 155      US-B1- 6 331 600**

• **CARMAN C J ET AL: "MONOMER SEQUENCE DISTRIBUTION IN ETHYLENE-PROPYLENE RUBBER MEASURED BY 13C NMR. 3. USE OF REACTION PROBABILITY MODEL" 1977, MACROMOLECULES, ACS, WASHINGTON, DC, US, PAGE(S) 536-544 , XP001083901 ISSN: 0024-9297 cited in the application the whole document**

**Description**

The present invention refers to propylene-ethylene copolymers and to a specific process for their production. In particular, the present invention refers to propylene-ethylene copolymers that are flexible and show a very good balance between softness and mechanical properties in their crude state.

The elastomeric propylene-ethylene copolymers (EPM), optionally containing smaller proportions of dienes (EPDM), represent an important class of polymers with a large variety of applications. The said elastomers are produced industrially by solution processes or slurry processes carried out, for example, in the presence of certain Ziegler-Natta catalysts based on vanadium compounds such as vanadium acetylacetonate as disclosed for example in GB 1,277,629, GB 1,277,353, and GB 1,519,472. Vanadium compounds in fact, in view of their good capability to randomly distribute the comonomers along the polymer chain, are usually able to produce very soft and elastomeric products. However, due to the fact that they are not able to produce isotactic propylene sequences and that they also give raise to 2,1-propylene units insertions, the propylene-ethylene elastomeric copolymers obtained with said catalysts have poor mechanical characteristics. Therefore, for the use in application where a good balance between mechanical properties (tensile strength) and softness (Shore A) is required, these products have to be blended with a more crystalline polymer fraction and then cured to create thermoplastic vulcanized polyolefins (TPO-V). On the other hand, the titanium based Z/N catalysts, in view of their stereospecificity, are able to generate long isotactic propylene sequences and the deriving propylene-ethylene polymers exhibit good mechanical properties. However, generally the titanium based catalysts do not have a good capability to randomly distribute the comonomer in and among the chains and therefore the quality of the rubbery phase is not particularly high especially when the ethylene content is higher than 15%. In these conditions in fact, the fraction of crystalline ethylene copolymers produced starts to increase and correspondently to deteriorate the properties of the rubber.

It is known that in certain conditions also ZN heterogeneous titanium based catalysts are able to provide elastomeric amorphous polymers. USP 6,084,047 discloses amorphous elastomeric copolymers obtained with the use of said catalysts. The amorphousness and the elastomeric properties are obtained only by incorporating into the propylene-ethylene copolymer high amounts of hexene-1 which greatly contributes to destroy the crystallinity of the propylene based polymer. As a result however, the polymers have mechanical properties that would prevent their use in the above mentioned applications where a good plasto-elastic balance is required.

Propylene-ethylene copolymers with elastomeric properties are also obtainable with metallocene based catalysts. EP 347128 discloses the preparation of said elastomeric copolymers which are characterized by a very narrow molecular weight distribution and a typically high value of regioerror (2-1 insertion of propylene units). Accordingly, these copolymers show, in their crude state, an unsatisfactory balance of elasto-plastic properties basically due to the insufficient tensile strength.

EP 586658 discloses the use of certain specific metallocene-based catalyst systems in the preparation of propylene-ethylene polymers having a good balance of elasto-plastic properties. In addition to the fact that the molecular weigh distribution was confirmed to be narrow, it must be noted that such a good balance is obtained only in correspondence of an ethylene content in the polymer which is higher than 50% by weight. Such a high content would inevitably lead to the presence of crystalline regions deriving from ethylene units sequences which, in turn, cause the copolymers to be prone to loose their mechanical capability with the increase of the temperature thereby preventing their use in applications where the temperature resistance is required. The problem of the presence of crystallinity deriving from polypropylene as opposed to that of polyethylene type was already recognized in USP4,928,721 in which the propylene-ethylene copolymers obtained have a lower ethylene content (lower than 50%wt) and superior mechanical properties. However, the softness of the copolymers is not sufficient as evidenced by the values of the Shore A at room temperature which is always higher than 75.

It is therefore still felt the need of propylene-ethylene copolymers having a balance of mechanical and elastomeric properties suitable in particular for the use of these products as such.

The object of the present invention is a propylene-ethylene copolymer comprising from 10 to 50%wt of ethylene and from 50 to 90% wt of propylene characterized by:

-    product of the comonomer reactivity ratio $r_1 \cdot r_2 \leq 1.5$;
-    absence of 2,1 propylene insertions and
-    tensile strength at break higher than 4 MPa.

Preferably, the product of the comonomer reactivity ratio $r_1 \cdot r_2$ is lower than 1.3 and more preferably equal to, or lower than, 1.

Propylene-ethylene copolymers with a particular good balance between mechanical properties and softness are obtainable with an ethylene content ranging preferably from 15 to 40%wt, more preferably from 17 to 30%wt. In particular, it has been observed that for ethylene content in the specific range of 17-25%wt, particularly 17-20%wt, the copolymers of the invention can find suitable applications as such. In any case, the said propylene-ethylene copolymer of the invention may also comprise up to 10%bw of additional alpha olefins $CH_2$=CHR, in which R is a C2-C8 hydrocarbon group, such as butene-1, hexene-1, and octane-1.

In general, the intrinsic viscosity is higher than 1 dl/g more preferably in the range 1-3dl/g. As mentioned, the tensile strength at break is higher than 4 MPa, in particular higher than 5 and specifically higher than 6 MPa. It is very interesting the fact that such values of tensile strength at break are coupled, for the copolymers of the invention, with low values of Shore A which indicate that the product is soft. In particular, the Shore A is usually lower than 80, preferably lower than 75 and more preferably lower than 65. As explained above, particularly interesting are the copolymers showing a Shore A in the range from 50 to 75 combined with a tensile strength at break higher than 5 MPa and preferably higher than 7 MPa.

In addition, the propylene-ethylene copolymers of the invention are characterized by a molecular weight distribution (MWD), determined via Gel Permeation Chromatography higher than 3 and preferably higher than 3.3.

It is also interesting to note that the propylene units are basically contained in long isotactic sequences. In fact, their content in form of isotactic triads (mm%) determined via $C^{13}$-NMR is higher than 90%, preferably higher than 95%, and more preferably higher than 97%.

In spite of that, the copolymers of the invention show a very low amount of coarse crystallinity which in some cases is even totally absent. Their melting temperature peak in fact, is in many cases not detectable through DSC measurements or they show broad peaks in the range 50-130°C. A further indication of the fact that the crystallinity is very low or absent is given by the very low amount of the polymer fraction insoluble in xylene at room temperature. Such amount is generally lower than 20% preferably lower than 15% and more preferably lower than 5% of the whole amount of polymer. As set forth above, the propylene-ethylene copolymers of the invention can be used as such in a variety of applications and manufacturing techniques. For example, they can be extruded for manufacturing seals, profiles, membranes, wires, cables and elastic fibres for the manufacturing of fabrics. Through the molding techniques a wide range of applications can be covered including all the soft touch consumer products and the elastic films to be used in the packaging field. In all these applications the copolymers of the invention can be used without crosslinking or curing being required for such use.

In view of their plastoelastic properties and softness, an additional use of the copolymers of the invention can be as a modifying component in the manufacturing of polyolefin compositions. The copolymers of the invention, particularly those having an ethylene content between 25 and 50% of ethylene, can be blended in any ratio with other polyolefins in order to prepare polyolefin compositions having tailored mechanical and elastomeric balance. Indeed, the property pattern of the copolymers of the invention allows them either to soften too rigid polymers or composition or to act as a compatibilizer between crystalline and completely amorphous, rubbery, polymers. When added as a modifying component the copolymers of the invention are usually present in amounts of less than 50%wt with respect to the weight of the total composition. These compositions can also be used in several sectors such as automotive, industrial and consumer appliances, and electrics. Particularly in the automotive sector, preferred compositions would be those comprising (A) from 5 to 35% of the copolymers of the invention and (B) from 65 to 95% of a crystalline propylene polymer optionally containing up to 15% of ethylene or higher alpha olefins different from propylene, the percentages being referred to the sum of A and B. Particularly preferred are the compositions in which (A) is from 10 to 30%wt and (B) is from 70 to 90%wt.

As it is known in the art, conventional additives, fillers and pigments, commonly used in olefin polymers may be added (both to the polymers as such and to the deriving compositions), such as nucleating agents, extension oils, stabilizers, mineral fillers, and other organic and inorganic pigments. In particular, the addition of inorganic fillers, such as talc, calcium carbonate and mineral fillers, also brings about an improvement of some mechanical properties, such as flexural modulus and HDT.

The nucleating agents are usually added to the compositions of the present invention in quantities ranging from 0.01 to 2% by weight, more preferably from 0.1 to 1% by weight with respect to the total weight.

One of the methods for preparing the copolymers of the invention comprises polymerizing ethylene and propylene, and possibly additional comonomers, in the presence of a heterogeneous ZN catalyst at a temperature above 80°C in a liquid reaction medium capable to maintain the nascent polymer in solution.

The polymerization temperature is preferably higher than 90°C and preferably comprised in the range 90-120°C. The liquid reaction medium preferably comprises a liquid hydrocarbon having a boiling point at atmospheric pressure higher than 60°C and more preferably higher than 70°C such as toluene, cyclohexane, decane etc. Of course, the liquid reaction medium in which the polymerization takes place also contains the monomer, the comonomer(s) and, optionally, the chain transfer agent (for example hydrogen). Usually, the amount of polymer dissolved in the reaction medium ranges from 10 to 40%wt/vol preferably from 20 to 35%. The amount of polymer dissolved in the liquid reaction medium is generally a compromise between the target of maximum productivity of the polymerization and the operability of the reactor which becomes troublesome when the polymer concentration is too high. In the latter case in fact, the viscosity of the solution does not permit an efficient stirring and the heat removal is problematic. Variations of the polymer solubility may also derive from production of polymer with different molecular weight (polymers with higher molecular weight are generally less soluble) and different chemical composition (by varying the ethylene content also variation in polymer solubility may be observed). For all these reasons it is important to have an inert reaction medium that ensures the polymer solubility over an as wide as possible range of operative conditions (polymer concentration, polymer molecular weight and polymer composition). It has been observed that for the preparation of the polymers of the present invention cyclohexane is the preferred reaction medium because it allows a great flexibility of the process conditions while maintaining the nascent polymer in solution.

The ZN heterogeneous catalyst used comprises the reaction product of an organoaluminum compound with a solid catalyst component comprising a titanium compound containing at least one Ti-halogen bond and an electron donor compound supported on a magnesium chloride. Magnesium dichloride in active form is preferably used as a support. It is widely known from the patent literature that magnesium dichloride in active form is particularly suited as a support for Ziegler-Natta catalysts. In particular, USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are $TiCl_4$ and $TiCl_3$; furthermore, also Ti-haloalcoholates of formula $Ti(OR)_{n-y}X_y$, where n is the valence of titanium, X is halogen, preferably chlorine, and y is a number between 1 and n, can be used.

The internal electron-donor compound is preferably selected from esters and more preferably from alkyl, cycloalkyl or aryl esters of monocarboxylic acids, for example benzoic acids, or polycarboxylic acids, for example phthalic or succinic acids, the said alkyl, cycloalkyl or aryl groups having from 1 to 18 carbon atoms. Examples of the said electron-donor compounds are diisobutyl phthalate, diethylphtahalate and dihexylphthalate. Generally, the internal electron donor compound is used in molar ratio with respect to the $MgCl_2$ of from 0.01 to 1 preferably from 0.05 to 0.5.

The preparation of the solid catalyst component can be carried out according to several methods.

According to one of these methods, the magnesium dichloride in an anhydrous state and the internal electron donor compound are milled together under conditions in which activation of the magnesium dichloride occurs. The so obtained product can be treated one or more times with an excess of $TiCl_4$ at a temperature between 80 and 135°C. This treatment is followed by washings with hydrocarbon solvents until chloride ions disappeared. According to a further method, the product obtained by co-milling the magnesium chloride in an anhydrous state, the titanium compound and the internal electron donor compound is treated with halogenated hydrocarbons such as 1,2-dichloroethane, chlorobenzene, dichloromethane etc. The treatment is carried out for a time between 1 and 4 hours and at temperature of from 40°C to the boiling point of the halogenated hydrocarbon. The product obtained is then generally washed with inert hydrocarbon solvents such as hexane.

According to another method, magnesium dichloride is pre-activated according to well known methods and then treated with an excess of $TiCl_4$ at a temperature of about 80 to 135°C which contains, in solution, an internal electron donor compound. The treatment with $TiCl_4$ is repeated and the solid is washed with hexane in order to eliminate any non-reacted $TiCl_4$.

A further method comprises the reaction between magnesium alcoholates or chloroalcoholates (in particular chloroalcoholates prepared according to U.S. 4,220,554) and an excess of $TiCl_4$ comprising the internal electron donor compound in solution at a temperature of about 80 to 120°C.

According to a preferred method, the solid catalyst component can be prepared by reacting a titanium compound of formula $Ti(OR)_{n-y}X_y$, where n is the valence of titanium and y is a number between 1 and n, preferably $TiCl_4$, with a magnesium chloride deriving from an adduct of formula $MgCl_2 \cdot pROH$, where p is a number between 0,1 and 6, preferably from 2 to 3.5, and

R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with the Ti compound or it can be previously subjected to thermal controlled dealcoholation (80-130°C) so as to obtain an adduct in which the number of moles of alcohol is generally lower than 3 preferably between 0,1 and 2,5. The reaction with the Ti compound can be carried out by suspending the adduct (dealcoholated or as such) in cold $TiCl_4$ (generally 0°C); the mixture is heated up to 80-130°C and kept at this temperature for 0,5-2 hours. The treatment with $TiCl_4$ can be carried out one or more times. The internal electron donor compound can be added during the treatment with $TiCl_4$. The treatment with the electron donor compound can be repeated one or more times.

The preparation of catalyst components in spherical form is described for example in European Patent Applications EP-A-395083, EP-A-553805, EP-A-553806, EPA-601525 and WO98/44001.

The solid catalyst components obtained according to the above method show a surface area (by B.E.T. method) generally between 20 and 500 $m^2$/g and preferably between 50 and 400 $m^2$/g, and a total porosity (by B.E.T. method) higher than 0,2 $cm^3$/g preferably between 0,2 and 0,6 $cm^3$/g. The porosity (Hg method) due to pores with radius up to 10.000Å generally ranges from 0.3 to 1.5 $cm^3$/g, preferably from 0.45 to 1 $cm^3$/g.

The organo-aluminum compound is preferably chosen among the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

The external donors (C) are preferably selected among silicon compounds of formula $R_a{}^5R_b{}^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. A particularly preferred group of silicon compounds is that
in which a is 0, c is 3, b is 1 and $R^6$ is a branched alkyl or cycloalkyl group, optionally containing heteroatoms, and $R^7$ is methyl. Examples of such preferred silicon compounds are cyclohexyltrimethoxysilane, t-butyltrimethoxysilane and thexyltrimethoxysilane. The use of thexyltrimethoxysilane is particularly preferred.

The electron donor compound (C) is used in such an amount to give a molar ratio between the organoaluminum compound and said electron donor compound (c) of from 0.1 to 500, preferably from 1 to 300 and more preferably from 3 to 100.

The following examples are provided in order to further illustrate the present invention and should not be construed to limit in anyway it.

### EXAMPLES

### Characterization

Comonomer content

The composition of ethylene/propylene copolymers was determined by $^{13}$C NMR analysis carried out using a Bruker DPX 400 spectrometer, at a temperature of 120 °C, on samples prepared by dissolving about 60 mg of polymer in 0.5 mL of dideuterated tetrachloroethane. The spectra were recorded with the following parameters: Relaxation delay = 12 sec, Number of scans = 1000-1500, Pulse width 90°. Broad Band decoupling using WALTZ 16 as decoupling sequence.

The amount of ethylene and propylene were obtained from triad distribution using the method described by Kakugo (Kakugo, M.; Naito, Y.; Mizunuma, K.; Miyatake, T. Macromolecules, 1982, 15, 1150)

The product of reactivity ratio $r_1r_2$ was calculated according to Carman (C.J. Carman, R.A. Harrington and C.E. Wilkes, Macromolecules, 1977; 10, 536) as:

$$r_1r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm)

Determination of the regioinvertions: determined by means of $C^{13}$-NMR according to the methodology described by J.C. Randall in "Polymer sequence determination Carbon 13 NMR method", Academic Press 1977. The content of regioinvertions is calculated on the basis of the relative concentration of $S_{\alpha\beta} + S_{\beta\beta}$ methylene sequences.

The intrinsic viscosity [η] was measured in tetraline at 135°C.

The differential scanning calorimetry (DSC)

Calorimetric measurements were performed by using a differential scanning calorimeter DSC Mettler. The instrument is calibrated with indium and tin standards. The weighted sample (5-10 mg), obtained from the Melt Index determination, was sealed into aluminum pans, heated to 200°C and kept at that temperature for a time long enough (5 minutes) to allow a complete melting of all the crystallites. Successively, after cooling at 20°C/min to - 20°C, the peak temperature was assumed as crystallisation temperature (Tc). After standing 5 minutes at 0°C, the sample was heated to 200°C at a rate of 20°C/min. In this second heating run, the peak temperature was assumed as melting temperature (Tm) and the area as the global melting hentalpy (ΔH).

<u>The molecular weight distribution</u> was determined by GPC according to the following method. Molecular weights and molecular weight distribution were measured at 145°C using a Alliance GPCV 2000 instrument (Waters) equipped with three mixed-bed columns TosoHaas TSK GMHXL-HT having a particle size of 13 μm. The dimensions of the columns were 300 × 7.8 mm. The mobile phase used was vacuum distilled 1,2,4-Trichlorobenzene (TCB) and the flow rate was kept at 1.0 ml/min. The sample solution was prepared by heating the sample under stirring at 145°C in TCB for two hours. The concentration was 1 mg/ml. To prevent degradation, 0.1 g/l of 2,6- diterbutyl-p-cresol were added. 326.5 μL of solution were injected into the column set. A calibration curve was obtained using 10 polystyrene standard samples (EasiCal kit by Polymer Laboratories) with molecular weights in the range from 580 to 7500000; additionally two other standards with peak molecular weight of 11600000 and 13200000 from the same manufacturer were included. It was assumed that the K values of the Mark-Houwink relationship were:

K = 1.21 × 10$^{-4}$ dL/g and α = 0.706 for the polystyrene standard

K = 2.32-2.43 × 10$^{-4}$ dL/g and α = 0.725 for the samples

A third order polynomial fit was used for interpolate the experimental data and obtain the calibration curve. Data acquisition and processing was done by using Millenium 4.00 with GPC option by Waters.

<u>Melt Index:</u>

Melt index (M.I.) are measured at 230°C following ASTM D-1238 over a load of:

2.16 Kg, MI E = MI$_{2.16}$.

<u>Xylene solubility (XSRT):</u>

The solubility in xylene at 25°C was determined according to the following modalities:

about 2.5 g of polymer and 250 ml of o-xylene were placed in a round-bottomed flask provided with cooler, reflux condenser and kept under nitrogen. The obtained mixture was heated to 135°C and was kept under stirring for about 60 minutes. The final solution was allowed to cool to 25°C, under continuous stirring; it was then filtered off and divided in two portions of 100 ml each. The first solution was evaporated in a nitrogen flow at 140°C to reach a constant weight; the weight of the soluble portion was calculated (XSRT). The latter was treated with 200 ml of acetone and the precipitated polymer was recovered by filtration and dried at 70°C under vacuum. From this weight, the amount of polymer insoluble in acetone is calculated (amorphous part).

<u>Shore (A) measured according to ISO 868</u>

<u>Compression set 100°C</u>: ASTM D395, method B, type 1
<u>Tension set 100°C</u>: ASTM D412, using a sample according to ISO 2285.
<u>Tension set 23°C</u>: ASTM D412, using a sample according to ISO 2285.
<u>Elongation at break</u>: ISO 527 using a specimen type S2 and a cross head speed of 500mm/min.
<u>Tensile strength (stress at break)</u>: ISO 527 using a specimen type S2 and a cross head speed of 500mm/min.

**Examples 1-6**

In a 4.5 liter autoclave, purged with nitrogen flow at 70 °C for one hour, 1200 mL of cyclohexane and 0.63 mg of triethyaluminum were introduced at 30 °C. The autoclave was closed and the temperature was raised to 98 °C and ethylene, propylene and hydrogen (amounts reported in Table 1) were added. A weighted quantity of solid catalyst precursor, prepared as described in example 2 of US 6,127,304, was activated in 20 mL of cyclohexane with 70 mg of triethyaluminum and an amount of external donor such as to give a Al/donor molar ratio of 20. After 5 minutes the catalyst suspension was injected in the autoclave by nitrogen overpressure. The internal pressure was kept constant for the entire polymerization test by feeding an ethylene/propylene mixture having nearly the same composition of the copolymer under production. After 30 minutes the copolymer solution was discharged from the autoclave and the monomers removed. After evaporation of the cyclohexane, the polymer was recovered and carefully dried at 70 °C under vacuum for 8 hours. The characterization of the copolymers is reported in Table 2.

### Example 7

The same procedure according to examples 1-7 was used with the difference that the solid catalyst precursor was prepared according to the disclosure of Example 42 of WO00/63261 and that no external donor was used. The characterization of the copolymer is reported in Table 2.

### Examples 8-10

The same procedure according to examples 1-7 was used with the difference that the solid catalyst precursor was prepared according to the disclosure of Example 10 of WO00/63261 and that the polymerization of example 10 lasted only 15 minutes. The characterization of the copolymers is reported in Table 2.

### Example 11

A mechanical blend comprising 80%bw of a commercially available isotactic polypropylene homopolymer having a MFR (230°C/2.16Kg) of 12 and 20% of the copolymers of the invention produced in accordance with the procedure of examples 1-6, having an ethylene content of 31.9% and an intrinsic viscosity of 2.93 was prepared. The characterization of the composition is reported on table 3.

### Comparison Example 12

A mechanical blend comprising 36% of a heterophasic copolymer containing 45 parts of a cristalline polypropylene matrix and 55 parts of a C3/C2 rubber was prepared. The characterization of the composition is reported on table 3.

Table 1

| Example | Catalyst | ED | Propylene | Ethylene | | $H_2$ | T | Yield |
|---|---|---|---|---|---|---|---|---|
| | | | Fed | initial | fed | | | |
| | mg | type | G | g | g | NmL | °C | Kg/g |
| | | | | | | | | |
| 1 | 6.6 | D | 43 | 19 | 11 | 250 | 100 | 12.0 |
| 2 | 5.6 | D | 23 | 21 | 7 | 250 | 100 | 12.3 |
| 3 | 7.8 | D | 79 | 18 | 15.4 | 550 | 100 | 12.2 |
| 4 | 6.4 | T | 40 | 19 | 10 | 250 | 100 | 12.8 |
| 5 | 6.7 | T | 40 | 21 | 12 | 250 | 100 | 14.3 |
| 6 | 16 | T | 30 | 24 | 10 | 300 | 110 | 7.8 |
| 7 | 12 | absent | 38 | 8 | 7 | 100 | 100 | 7.1 |
| 8 | 15.7 | D | 70 | 15 | 23 | 500 | 100 | 5.7 |
| 9 | 14.1 | T | 63 | 15 | 21 | 500 | 100 | 6.0 |
| 10 | 19 | T | 90 | 21 | 25 | 200 | 100 | 5.1 |
| D= dicyclopentyldimethoxysilane<br>T= 2,3-dimethylbutan-2-yl trimethoxy silane | | | | | | | | |

Table 2

| Example | XI | IV | NMR analysis | | | DSC | | | GPC | Stress at Break | Elongation at Break | Shore A |
|---|---|---|---|---|---|---|---|---|---|---|---|---|
| | | | Ethylene | mm | $r_1r_2$ | Tm | $\Delta$H | Tc | $M_w/M_n$ | | | |
| | %wt | dL/g | %wt | % | | °C | J/g | °C | | MPa | % | |
| 1 | 1.0 | 2.47 | 22.1 | >99 | 1.08 | - | - | - | | 6.9 | >500 | 46 |
| 2 | 1.0 | 2.12 | 19.6 | >99 | 1.23 | am. | am. | 70/29 | 3.7 | 12.3 | >500 | 59.5 |
| 3 | 0.0 | 1.27 | 21.0 | >99 | 1.05 | - | - | - | | 8.0 | >500 | 52.5 |
| 4 | 1.0 | 1.9 | 19.6 | >99 | 0.84 | am. | am. | nd | 3.6 | 9.9 | >500 | 54.5 |
| 5 | 1.0 | 1.84 | 19.4 | >99 | 0.92 | - | - | - | | 8.9 | >500 | 53.5 |
| 6 | 0.1 | 2.1 | 26.1 | 96 | 1.33 | - | - | - | 9.5 | 8.8 | >500 | 56.5 |
| 7 | 14.0 | 2.18 | 16.3 | 92 | 1.17 | 100 | 16 | 65 | 8.0 | 12.0 | >500 | 74.5 |
| 8 | 2.6 | 1.84 | 20.35 | >99 | 0.98 | am. | am. | 70/34 | 5.4 | 7.4 | >500 | 57 |
| 9 | 0.0 | 1.59 | 18.94 | >99 | 1 | am. | am. | 72.6 | 5.5 | 9.7 | >500 | 62 |
| 10 | 4.8 | 2.98 | 23.96 | >99 | 0.91 | - | - | - | 7.9 | 4.9 | >500 | 50 |
| am. = amorphous nd = not detected | | | | | | | | | | | | |

Table 3

|  | MFR g/10' | Tens. Mod MPa | Izod 23°C J/m | Izod-20°C-J/m | Yield @stress Mpa | Elong. At Yield % | Stress at Break MPa |
|---|---|---|---|---|---|---|---|
| Ex.11 | 6.5 | 1360 | 378 | 54.1 | 20.7 | 4.5 | 17.6 |
| Comp.12 | 7.7 | 1420 | 104 | 63 | 20.1 | 4 | 17.9 |

## Claims

1. Propylene-ethylene copolymer comprising from 10 to 50%wt of ethylene and from 50 to 90% wt of propylene **characterized by**:

   - product of the comonomer reactivity ratio r1•r2≤1.5;
   - absence of 2,1 propylene insertions and
   - tensile strength at break higher than 4 MPa.

2. Propylene-ethylene copolymer according to claim 1 in which the reactivity ratio r1•r2 is lower than 1.3.

3. Propylene-ethylene copolymer according to claim 1 in which the ethylene content ranges from 15 to 40%wt.

4. Propylene-ethylene copolymer according to claim 1 in which the tensile strength at break is higher than 5 MPa.

5. Propylene-ethylene copolymer according to claim 1 having a Shore A value lower than 80.

6. Propylene-ethylene copolymer according to claim 1 in which molecular weight distribution (MWD), determined via Gel Permeation Chromatography is higher than 3.

7. Propylene-ethylene copolymer according to claim 1 in which the content of propylene units in form of isotactic triads (mm%) determined via $C^{13}$ NMR is higher than 95%.

8. Articles containing the propylene-ethylene copolymers according to anyone of the preceding claims.

9. Polyolefin composition comprising:

   (A) from 1 to 99% of a copolymer according to anyone of the preceding claims and
   (B) from 1 to 99% of a polyolefin different from (A).

10. Polyolefin composition according to claim 9 in which (A) is from 5 to 35% and (B) is from 65 to 95% of a crystalline propylene polymer optionally containing up to 15% of ethylene or higher alpha olefins.

11. Process for the preparation of the propylene-ethylene copolymers of claim 1 comprising polymerizing ethylene and propylene, and possibly additional comonomers, in the presence of a heterogeneous ZN catalyst at a temperature above 80°C in a liquid reaction medium capable to maintain the nascent polymer in solution.


## Patentansprüche

1. Propylenethylen-Copolymer, umfassend von 10 bis 50 Gew.-% Ethylen und von 50 bis 90 Gew.-% Propylen, **gekennzeichnet durch**:

   - das Produkt des Comonomer-Reaktivitätsverhältnisses r1•r2 ≤ 1,5;
   - die Abwesenheit von 2,1 Propylen-Insertionen und
   - eine Reißfestigkeit von höher als 4 MPa.

2. Propylenethylen-Copolymer nach Anspruch 1, worin das Reaktivitätsverhältnis von r1•r2 niedriger als 1,3 ist.

**3.** Propylenethylen-Copolymer nach Anspruch 1, worin der Ethylengehalt im Bereich von 15 bis 40 Gew.-% liegt.

**4.** Propylenethylen-Copolymer nach Anspruch 1, worin die Reißfestigkeit höher als 5 MPa ist.

**5.** Propylenethylen-Copolymer nach Anspruch 1 mit einem Shore A-Wert von niedriger als 80.

**6.** Propylenethylen-Copolymer nach Anspruch 1, worin die über die Gelpermeationschromatographie ermittelte Molekulargewichtsverteilung (MGV) höher als 3 ist.

**7.** Propylenethylen-Copolymer nach Anspruch 1, worin der über die $C^{13}$-NMR bestimmte Gehalt an Propyleneinheiten in Form isotaktischer Triaden (mm %) höher als 95 % ist.

**8.** Gegenstände, enthaltend die Propylenethylen-Copolymere nach einem der vorangehenden Ansprüche.

**9.** Polyolefinzusammensetzung, umfassend:

(A) von 1 bis 99 % eines Copolymers nach einem der vorangehenden Ansprüche und
(B) von 1 bis 99 % eines sich von (A) unterscheidenden Polyolefins.

**10.** Polyolefinzusammensetzung nach Anspruch 9, worin (A) von 5 bis 35 % und (B) von 65 bis 95 % eines kristallinen Propylenpolymers darstellt, optional enthaltend bis zu 15 % Ethylen oder höhere $\alpha$-Olefine.

**11.** Verfahren zur Herstellung des Propylenethylen-Copolymers nach Anspruch 1, umfassend das Polymerisieren von Ethylen und Propylen, und möglicherweise zusätzlicher Comonomere, in Gegenwart eines heterogenen ZN-Katalysators bei einer Temperatur über 80 °C in einem flüssigen Reaktionsmedium, das zur Aufrechterhaltung des naszierenden Polymers in Lösung fähig ist.


**Revendications**

**1.** Copolymère de propylène-éthylène comprenant 10 à 50% en poids d'éthylène et 50 à 90% en poids de propylène, **caractérisé par** :

- le produit des rapports de réactivité de comonomères r1 • r2 ≤ 1,5 ;
- une absence d'insertions de propylène 2,1 et
- une résistance à la rupture par traction supérieure à 4 MPa.

**2.** Copolymère de propylène-éthylène selon la revendication 1, dans lequel le rapport de réactivité r1 • r2 est inférieur à 1,3.

**3.** Copolymère de propylène-éthylène selon la revendication 1, dans lequel la teneur en éthylène est de 15 à 40% en poids.

**4.** Copolymère de propylène-éthylène selon la revendication 1, dans lequel la résistance à la rupture par traction est supérieure à 5 MPa.

**5.** Copolymère de propylène-éthylène selon la revendication 1 présentant une valeur de Shore A inférieure à 80.

**6.** Copolymère de propylène-éthylène selon la revendication 1, dans lequel la distribution des poids moléculaires (DPM), déterminée par chromatographie par perméation de gel, est supérieure à 3.

**7.** Copolymère de propylène-éthylène selon la revendication 1, dans lequel la teneur en unités de propylène sous forme de triades isotactiques (% mm) déterminée par $^{13}$C-RMN est supérieure à 95%.

**8.** Objets contenant les copolymères de propylène-éthylène selon l'une quelconque des revendications précédentes.

**9.** Composition polyoléfinique comprenant :

(A) 1 à 99% d'un copolymère selon l'une quelconque des revendications précédentes et

(B) 1 à 99% d'une polyoléfine différente de (A).

**10.** Composition polyoléfinique selon la revendication 9 dans laquelle (A) représente 5 à 35% et (B) représente 65 à 95% d'un polymère de propylène cristallin contenant éventuellement jusqu'à 15% d'éthylène ou d'alpha-oléfines supérieures.

**11.** Procédé pour la préparation de copolymères de propylène-éthylène selon la revendication 1, comprenant la polymérisation d'éthylène et de propylène, et éventuellement de comonomères supplémentaires, en présence d'un catalyseur hétérogène ZN à une température supérieure à 80°C dans un milieu de réaction liquide capable de maintenir le polymère qui se forme en solution.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1277629 A
- GB 1277353 A
- GB 1519472 A
- US P6084047 A
- EP 347128 A
- EP 586658 A
- US P4928721 A
- US P4298718 A
- US P4495338 A
- US 4220554 A

- US P4399054 A
- US P4469648 A
- EP 395083 A
- EP 553805 A
- EP 553806 A
- EP 601525 A
- WO 9844001 A
- US 6127304 A
- WO 0063261 A

**Non-patent literature cited in the description**

- **KAKUGO, M. ; NAITO, Y. ; MIZUNUMA, K. ; MIYATAKE, T.** *Macromolecules,* 1982, vol. 15, 1150
- **C.J. CARMAN ; R.A. HARRINGTON ; C.E. WILKES.** *Macromolecules,* 1977, vol. 10, 536

- **J.C. RANDALL.** Polymer sequence determination Carbon 13 NMR method. Academic Press, 1977